# EUROPÄISCHE PATENTSCHRIFT

(11) **EP 1 093 406 B1**
(45) Veröffentlichungstag und Bekanntmachung des Hinweises auf die Patenterteilung: **03.09.2003**
(21) Anmeldenummer: 99931219.2
(22) Anmeldetag: 30.06.1999
(51) Int. Cl.: B23K 11/31

(54) **HYDRAULISCHE ANTRIEBSEINRICHTUNG FÜR EINE WIDERSTANDSSCHWEISSMASCHINE**
HYDRAULIC DRIVE UNIT FOR A RESISTANCE WELDING MACHINE
SYSTEME D'ENTRAINEMENT HYDRAULIQUE POUR MACHINE A SOUDER PAR RESISTANCE

(30) Priorität: 03.07.1998 DE 19829679
(43) Veröffentlichungstag der Anmeldung: 25.04.2001
(73) Patentinhaber: HARTMANN + LÄMMLE GMBH & CO. KG, 71277 Rutesheim (DE); Manfred Schlemmer GmbH, 45307 Essen (DE)
(72) Erfinder: SCHULZE, Eckehart, D-71287 Weissach (DE); SCHLEMMER, Manfred, D-45133 Essen (DE)
(74) Vertreter: Lutz, Johannes Dieter, Dr.
(86) Internationale Anmeldenummer: EP9904508
(87) Internationale Veröffentlichungsnummer: WO00001505

(56) Entgegenhaltungen:
- DE-A- 19 529 981
- PATENT ABSTRACTS OF JAPAN vol. 004, no. 045 (M-006), 9. April 1980 (1980-04-09) & JP 55 014338 A (DENGENSHA MFG CO LTD), 31. Januar 1980 (1980-01-31)

## Beschreibung

Die Erfindung betrifft eine elektrohydraulische Antriebseinrichtung für eine Widerstandsschweißmaschine. Als nächstliegender Stand der Technik ist die JP-A-55-014 338 anzusehen, bei der mittels eines doppelt wirkenden zylinders und eines Regelventiles die Antriebs kraft am Beginn einer Schweißung limitiert wird.

Bei einer bekannten Antriebseinrichtung dieser Art ist zur Einstellung einer "Vorspann"-Kraft, mit der je zwei miteinander zu verschweißende Werkstücke vor dem Auslösen eines Schweißstromstoßes und mindestens für dessen Dauer aneinander andrückbar sind, ein Hydrozylinder vorgesehen, mittels dessen eine Druckfeder zusammendrückbar und dadurch auf eine definierte Vorspannung bringbar ist, die an einer zur Schweißstromeinleitung in die Werkstücke vorgesehenen stabilen Oberelektrode angreift und dadurch die Werkstücke, die zwischen der beweglichen Oberelektrode und einer feststehenden Unterelektrode angeordnet sind, aneinander andrückt. Eines der Werkstücke ist an seiner dem anderen Werkstück zugesandten Seite mit "Schweiß"-Buckeln gleicher Höhe h versehen, die eine kleinflächige, gleichsam punkt- oder linien-förmige Abstützung der Werktstücke aneinander ergeben, die dadurch vor dem Verschweißen miteinander in einem etwa der Bukkelhöhe entsprechenden lichten Abstand voneinander gehalten sind, wobei wegen der Kleinflächigkeit dieser Abstützung noch ein relativ hoher elektrischer Übergangswiderstand gegeben ist, der für den Wärmeeintrag in die Werkstücke durch elektrischen Strom günstig ist. Die Stromeinkopplung in die im Sekundärkreis eines Transformators liegenden Werkstücke erfolgt durch eine rasche Entladung einer im Primärkreis des Transformators liegenden Kondensatorbatterie über die Primärwicklung des Transformators, wobei der Entladungsstrom durch elektrische Ansteuerung eines elektronischen Thyristor-Schalters in dessen leitenden Zustand ausgelöst wird, in dem der Ohmsche Widerstand des Schalters vernachlässigbar niedrig ist.

Bei dieser Art der Bestromung der Schweißstrecke ergibt sich zunächst mit dem Einsetzen der Kondensatorentladung ein rascher Anstieg des Schweißstromes bis zum einem Maximum, an das sich ein im wesentlichen exponentieller Abfall des Schweißstromes anschließt, der aus der Erschöpfung der im Kondensator gespeicherten elektrischen Energie resultiert. Während des Stromeintrages werden die z.B. spitzkegelförmig gestalteten Buckel, mehr und mehr abgeschmolzen und verschmelzen dabei auch mit dem an sie angedrückten Werkstück, das durch die Wirkung der Vorspannfeder nachsetzen kann, deren Vorspannkraft als konstant angesehen werden kann, wenn der Feder-Spannweg groß gegen die Höhe h der Buckel ist.

Aus dem insoweit geschilderten Aufbau der bekannten Antriebseinrichtung und der hierdurch bedingten Art der Durchführung eines Schweißzyklus resultierende Probleme, die sich auf die Qualität der Verschweißung auswirken können, sind zumindest die folgenden:

Schon bevor der Schweißstromstoß ausgelöst wird, sind die Werkstücke mit dem Maximalbetrag der Feder-Vorspannkraft gegeneinander gedrängt, was z.B. bei einer spitzkegelförmigen Gestaltung der Schweißbuckel oder einer prismatisch-rippenförmigen Gestaltung der Schweißbuckel dazu führt, daß die Buckel sich in das Material des an sie angedrückten "Gegen"-Werkstücks eingraben können, mit der Folge, daß die im Bereich der Buckel gegebenen elektrischen Übergangswiderstände relativ gering sind, was zu einem zu geringen Wärmeeintrag in die Schweißstellen führen und deren Qualität - Belastbarkeit - ungünstig beeinflussen kann.

Damit die in der Kondensatorbatterie gespeicherte elektrische Energie möglichst quantitativ für den Schweißprozeß ausnützbar ist, sollten die Schweißbuckel innerhalb der Zeitspanne, in der sich der Energieinhalt der Kondensatorbatterie erschöpfen kann, nicht vollständig abgeschmolzen werden, um elektrische und thermische Nebenschlüsse, die durch flächige Anlage der Werkstücke im Bereich zwischen den Buckeln bedingt sein könnten und mit erheblichen Energieverlusten verknüpft wären, zu vermeiden. Hierfür sind sehr zeitaufwendige Vorversuche erforderlich sowie auch eine hochpräzise Fertigung der Werkstücke, insbesondere der Gestaltung der Schweißbuckel.

Aufgabe der Erfindung ist es daher, eine Antriebseinrichtung der eingangs genannten Art dahingehend zu verbessern, daß die Kraft, mit der die Werkstücke am Beginn einer Schweißung gegeneinander gedrängt sind, auf einen Betrag limitierbar ist, der signifikant kleiner ist als ein hoher Betrag der Antriebs-Kraft, die während des Schweißvorganges wirkt, und daß auch der Hub der Nachsetzbewegung definiert limitierbar ist, derart, daß innerhalb der Entladungszeit der Kondensatorbatterie eine flächige Berührung der miteinander zu verschweißenden Werkstücke sicher ausschließbar ist.

Diese Aufgabe wird erfindungsgemäß durch die kennzeichnenden Merkmale des Patentanspruchs 1 gelöst.

Hierdurch erzielbare Vorteile sind zumindest die folgenden:

Der Betrag der Kraft, mit der die miteinander zu verschweißenden Werkstücke gegeneinander gedrängt werden, ist auf einen kleinen Bruchteil des Betrages derjenigen Kraft reduzierbar, mit der die Werkstücke während des Verschweißens gegeneinander gedrückt werden. Dadurch kann am Beginn des Schweißvorganges ein definiert hoher Wert des Übergangswiderstandes zwischen den Werkstücken eingehalten werden, der zu einem zuverlässigen Anschmelzen der Schweißbuckel des einen Werkstückes an das andere Werkstück führt. Da bei einem "gleichzeitigen" Einschalten des Kondensator-Entladungsvorganges und der Umschaltung des Hydrozylinders auf erhöhte Vorschub-Kraft für den Nachsetzbetrieb, der eine Beschleunigung des Hydrozylinderkolbens voraussetzt, ein kleiner zeitlicher Nachlauf der Kolbenbewegung gegenüber dem Einsetzen des Schweißstromes erfolgt, ist hierbei sichergestellt, daß am Beginn der Verschweißung ein hoher Wert des Übergangswiderstandes nutzbar ist und die Schweißbuckel angeschmolzen werden können. Durch die elektrisch steuerbare Positions-Sollwertgabe, z.B. mittels eines Schrittmotors, der die Auslenkung des Kolbens des Nachlauf-Regelventils praktisch trägheitslos einzustellen vermag, ist zuverlässig der maximale Nachsetzhub des Kolbens des Antriebszylinders und damit des verschiebbaren Werkstückes einstellbar und auf den erforderlichen Betrag limitierbar, so daß auch zuverlässig ausgeschlossen werden kann, daß der Nachsetzhub des beweglichen Werkstückes in dessen großflächige Anlage mit dem feststehenden Werkstück führt, bevor der Schweißstrom abgeklungen ist. Ein als Energiespeicher und Kraftquelle für den Nachsetzbetrieb bestimmtes, mit relativ großem Hub zusammendrückbares Federelement, das, wie immer es gestaltet sein mag, einer Ermüdung unterworfen wäre, die die Reproduzierbarkeit der Schweißzyklen beeinträchtigen könnte, wird nicht benötigt, so daß insoweit sowohl eine Vereinfachung der Antriebseinreichtung als auch eine Verbesserung ihrer Funktionszuverlässigkeit erzielt wird.

Um in jedem Falle sicherzustellen, daß beim Einsetzen des Schweißstromes ein relativ hoher Übergangswiderstand im Bereich der Schweißbuckel nutzbar ist, ist es besonders vorteilhaft, wenn die zeitliche Korrelation zwischen dem Zeitpunkt des Einsetzens des Entladungsstromes und dem Zeitpunkt der Ansteuerung des Umschaltventils in dessen mit dem Hochdruck-Betrieb des Antriebs-Hydrozylinders verknüpfte Schaltstellung II vorgebbar ist, wobei, je nach der Massenträgheit des Antriebes und der einstellbaren Kräfte erforderlichenfalls schon eine voreilende Umschaltung des Umschaltventils in Betracht kommen kann, um zu erreichen, daß die Nachsetzbewegung des Kolbens des Antriebszylinders frühestens dann einsetzt, wenn auch der Schweißstrom einsetzt. Je nach Auslegung der Antriebseinrichtung kann es zu diesem Zweck auch erforderlich sein, daß der Ansteuerimpuls für das Umschaltventil mit einer kleinen Zeitverzögerung gegenüber dem Auslösen des Entladungsstromes ausgelöst wird.

Durch die Auslegung der Antriebseinrichtung gemäß Anspruch 3 ist auf einfache Weise sichergestellt, daß das während des Schweißvorgangs nachsetzende Werkstück innerhalb der Zeit, in der der Schweißstrom fließt, nicht in großflächigen Berührungskontakt mit dem feststehenden Werkstück gelangen und dadurch in der Kodensatorbatterie gespeicherte Energie nicht für den Schweißvorgang genutzt werden könnte.

Auch wenn, wie gemäß Anspruch 4 vorgesehen, die Positions-Sollwert-Vorgabe für das bewegliche Werkstück der fest vorgegebenen Position entspricht, die durch die Anordnung der dem beweglichen Werkstück zugewandten großflächigen Begrenzungsfläche des maschinenfest angeordneten Werkstücks markiert ist, wird immer noch, wegen der exponentiell abklingenden Kraft, die der nachlaufgeregelten Führung der Nachsetzbewegung inhärent ist, zuverlässig vermieden, daß die Berührungsposition als Endstellung erreicht wird, und in praxi selbst dann noch, wenn die durch die Sollwert-Vorgabe vorgegebene End-Position geringfügig jenseits dieser Berührungsposition liegt.

Durch die Merkmale der Ansprüche 5 und 6 sind Verfahrensweisen zur Betriebssteuerung der Antriebseinrichtung angegeben, die, zumindest auf der Basis einfach duchführbarer Vorversuche, zu einer optimalen Führung von Schweißzyklen geeignet sind.

Weitere Einzelheiten der erfindungsgemäßen Antriebseinrichtung ergeben sich aus der nachfolgenden Beschreibung eines speziellen Ausführungsbeispiels anhand der Zeichnung. Es zeigen:
- Fig. 1: eine schematisch vereinfachte Blockschaltbild-Darstellung der hydraulischen Antriebseinrichtung am Beispiel einer mit Kondensator-Entladung arbeitenden Widerstands-Schweißmaschine und
- Fig. 2a und 2b: Diagramme zur Erläuterung der Funktion der Antriebseinrichtung gemäß Fig. 1 sowie zu deren Betrieb geeigneter Verfahrensweisen.

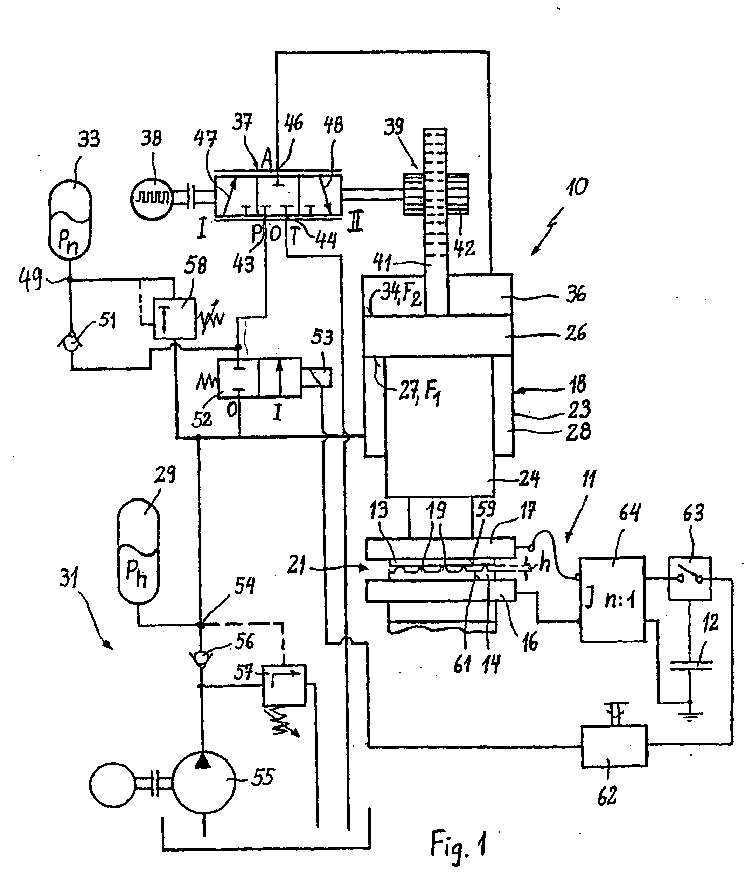

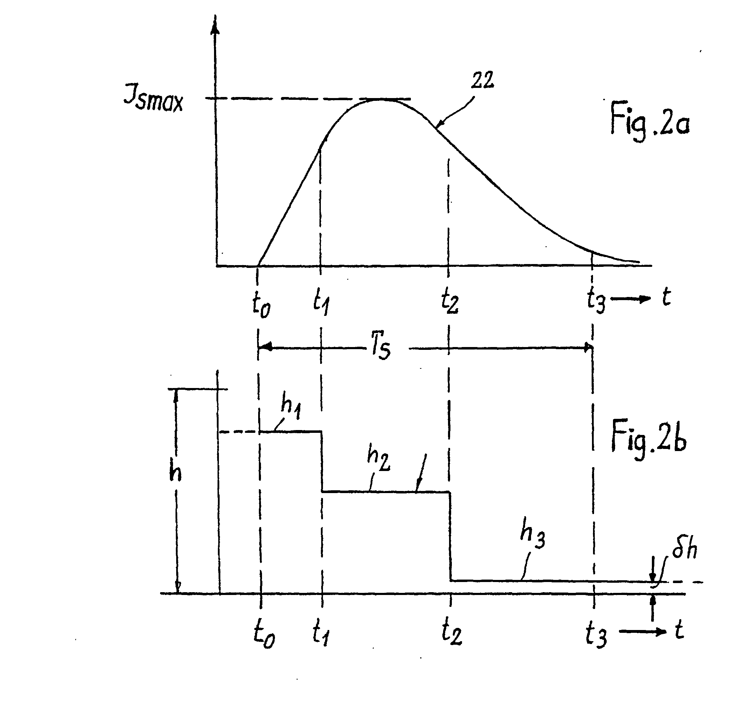

Die in der Fig. 1 insgesamt mit 10 bezeichnete elektrohydraulische Antriebseinrichtung ist für eine Widerstandsschweißmaschine 11 gedacht, für die, zum Zweck der Erläuterung, vorausgesetzt sei, daß ihre Schweißstromversorgung durch eine in kurzer Zeit ablaufende Entladung einer der Einfachheit halber lediglich durch einen einzigen Kondensator 12 repräsentierten Kondensatorbatterie erfolgt, deren Entladungsstrecke durch den Primärkreis eines Transformators 64 gebildet ist, mittels dessen in eine Schweiß-Strecke, die durch den Sekundärkreis des Kondensators gebildet ist und über die miteinander zu verschweißenden Werkstücke 13 und 14 führt, die zwischen einer maschinenfest angeordneten Unterelektrode 16 und einer Oberelektrode 17 angeordnet sind, die mittels eines hydraulischen Linearzylinders 18 bewegbar und dadurch an das obere Werkstück 13 andrückbar ist. Dadurch ist das obere Werkstück 13 mit definierter Kraft an Buckel 19, für die zum Zweck der Erläuterung angenommen ist, daß sie am unteren Werkstück 14 angeordnet sind, andrückbar, derart, daß sich eine punkt- oder linienförmige, in jedem Falle kleinflächige und mit einem relativ hohen Übergangswiderstand behaftete Berührung der beiden Werkstücke 13 und 14 ergibt, der bei einem Stromfluß über die insgesamt mit 21 bezeichnete Schweißstrecke zu einer großen Wärmeentwicklung im Bereich der Buckel 19 führt, die dadurch abschmelzen und so die Schweißverbindung der beiden Werkstücke 13 und 14 miteinander vermitteln. Während dieses Abschmelzens erfolgt, bedingt durch die Druckbeaufschlagung des hydraulischen Antriebszylinders 18 ein Nachsetzen des oberen Werkstückes 13 um einen Hub h-δh, der im wesentlichen oder annähernd der Höhe h der Buckel 19 entspricht. Dieser Schweißvorgang ist so gesteuert, daß vor dem Erreichen einer großflächigen Anlage der beiden Werkstücke 13 und 14 aneinander der Kondensator-Entladungsstrom, dessen zeitlicher Verlauf qualitativ durch die Verlaufskurve 22 der Fig. 2 repräsentiert ist, abgeklungen ist.

Der stehend angeordnete Antriebszylinder 18 ist als Differentialzylinder mit aus seinem Gehäuse 23 nach unten austretender Kolbenstange 24 ausgebildet, die fest mit dem Antriebskolben 26 verbunden ist, der zum einen mit einer ringförmigen, unteren Stirnfläche 27 des Betrages F₁ die axial bewegliche Begrenzung eines unteren, ringförmigen Druckraumes 28 bildet, in den im Betrieb permanent der hohe Ausgangsdruck Pₕ eines Hochdruckspeichers 29 des insgesamt mit 31 bezeichneten Druckversorgungsaggregats oder eingekoppelt ist. Zum anderen bildet der Kolben 26 mit seiner oberen, dem Betrage nach größeren Stirnfläche 34, deren Betrag F₂ etwa 10mal größer ist als derjenige der Ringfläche 27, die axial bewegliche Begrenzung eines oberen Antriebsdruckraumes 36 des Hydrozylinders 18, durch dessen ventilgesteuerte Druck-Beaufschlagung oder -Entlastung die auf die Werkstücke 13 und 14 zu gerichteten Vorschub- und Nachsetzbewegungen des Hydrozylinderkolbens 26 sowie dessen aufwärts gerichtete Rückzugsbewegungen steuerbar sind. In diesem oberen Druckraum 36 ist alternativ zu einer Druckbeaufschlagung mit dem hohen ausgangsdruck Ph des Druckversorgungsaggregats, der für die Steuerung von Nachsetzbewegungen des oberen Werkstückes 13 genutzt wird, auch der niedrigere Ausgangsdruck Pn einesNiederdrcukspeichers 33 einkoppelbar, der zur Steuerung von Vorschubbewegungen genutzt wird, durch die die Oberelektrode 17 in Anlage mit dem oberen Werkstück 13 gelangt.

Das zur Steuerung der Kolbenbewegungen vorgesehene Funktions-Steuerventil 37 ist als ein hinsichtlich seines prinzipiellen Aufbaus und seiner dadurch erzielbaren Funktionen für sich bekanntes Nachlauf-Regelventil ausgebildet, das mit elektrisch steuerbarer Vorgabe des Sollwertes der Position des Antriebs-Zylinderkolbens 26 und mechanischer Rückmeldung der Ist-Position desselben arbeitet, wobei zur Einstellung der Positions-Sollwertvorgabe ein impulsgesteuerter Schrittmotor 38 und zur "mechanischen" Istwert-Rückmeldung ein insgesamt mit 39 bezeichneter Zahnstangentrieb vorgesehen sind, der eine mit dem Antriebszylinderkolben 26 fest verbundene und daher mit diesem bewegungsgekoppelte Zahnstange 41 und ein durch diese rotatorisch antreibbares Rückmelderitzel 42 umfaßt, das durch axiale Hin- und Her- Bewegungen des Antriebskolbens 26 zu in alternativen Drehrichtungen erfolgenden rotatorischen Rückmelde-Bewegungen im Uhr- bzw. Gegenuhrzeigersinn antreibbar ist.

Das Nachlauf-Regelventil 37 ist als 3/3-Wege-Ventil implementiert, das eine "zentrale" Sperrstellung 0 hat, in der ein P-Druckversorgungsanschluß 43 und ein T-Rücklaufanschluß 44 gegeneinander und gegen einen A-Steueranschluß 46, der an den oberen, großflächig begrenzten Antriebsdruckraum 36 des Antriebszylinders 18 angeschlossen ist, abgesperrt sind.

Das Nachlauf-Regelventil 37 ist durch einen rotatorischen Antrieb des Schrittmotors 18 in der einen seiner beiden alterntiven Drehrichtungen, z.B. im Uhrzeigersinn, in eine Funktionsstellung I verstellbar, in welcher der P-Druckversorgunsanschluß 43 mit dem A-Steueranschluß 46 kommunizierend verbunden, jedoch gegen den T-Rücklaufanschluß 44 abgesperrt ist, und durch eine Ansteuerung des Schrittmotors 38 in der entgegengesetzten Drehrichtung in eine Funktionsstellung II steuerbar in der der A-Steueranschluß 46 kommunizierend mit dem T-Rücklaufanschluß 44 des Steuerventils 37 verbunden und der A-Versorgungsanschluß gegen die beiden anderen Ventilanschlüsse abgesperrt ist. Die als Zahnstangenbetrieb ausgebildete mechanische Rückmelde-Einrichtung arbeitet in der Weise, daß eine Kolben-Bewegung, die durch Einsteuerung der Funktionsstellung I erzielt wird und eine Kolbenbewegung, die durch Einsteuerung der Funktionsstellung II des Nachlauf-Regelventils 37 erzielt wird, dieses jeweils in die sperrende Mittelstellung 0 zurückführt, die somit der Gleichheit von Soll- und Istwert der Kolbenposition entspricht. Des weiteren ist das Funktionssteuerventil 37 so ausgebildet, daß mit zunehmender Auslenkung seines durch das 3/3-Ventilsymbol repräsentierten Kolbens aus der Mittelstellung zunehmende Querschnitte der jeweils freigegebenen Strömungspfade 47 bzw. 48 verknüpft wird.

Zwischen den P-Versorgungsanschluß 43 und den Druckanschluß 49 des Niederdruckspeichers 33 ist ein Rückschlagventil 51 geschaltet, das durch relativ höheren Druck am P-Druckversorgungsanschluß 43 des Nachlaufregelventils 37 als an diesem Druckausgang 49 des Niederdruckspeichers 33 sperrend und ansonsten in öffnungsrichtung beaufschlagt ist. Des weiteren ist zwischen den P-Druckversorgungsanschluß 43 des Nachlaufregelventils 37 und den P-Hochdruckausgang 54 des Druckversorgungsaggragats 31, der mit dem ringzylindrischen Antriebsdruckraum 28 des Hydrozylinders 18 in ständig-kommunizierender Verbindung steht, ein als 2/2-Wege-Magnetventil ausgebildetes Umschaltventil 52 geschaltet, das eine im stromlosen Zustand seines Steuermagneten 53 eingenommene sperrende Grundstellung 0 und als Schaltstellung I eine Durchflußstellung hat, in der der P-Versorgungsanschluß 43 des Nachlauf-Regelventils 37 mit dem P-Hochdruckausgang 54 des Druckversorgungsaggragats 31 verbunden ist.

Der Ausgangsdruck Pₕ des über ein Ausgangs-Rückschlagventil 56 der Pumpe 55 des Druckversorgungsaggragats 31 aufladbaren Hochdruckspeichers 29 ist durch ein DruckBegrenzungsventil 57 auf einen typischen Wert von ca. 140 bar begrenzt. Der Ausgangsdruck Pₙ des Niederdruckspeichers 33 ist durch ein Druckbegrenzungsventil 58 auf einen Wert um 15 bar begrenzt, so daß das Verhältnis Pₕ/Pₙ dieser Ausgangsdrücke geringfügig kleiner ist als 10/1 bzw. das Flächenverhältnis F₂/F₁ der druckbeaufschlagbaren Kolbenflächen 37 und 27 des Kolbens 26 des Antriebs-Hydrozylinders. Die Druckgrenzwerte, auf die die Druckbegrenzungsventile die im Hochdruckspeicher 29 und im Niederdruckspeicher 33 speicherbaren Drücke begrenzen, sind einstellbar vorgebbar.

Zur Erläuterung eines möglichen Schweißzyklus, der durch einen typischen Betriebsmodus der Antriebseinrichtung 10 steuerbar ist, sei angenommen, daß die Buckel 19 die Grundform von Spitzkegeln haben, deren Höhe h etwa dem Durchmesser ihrer Basis entspricht, wobei die oberen Enden - "Spitzen" - dieser Kegel mit kleinem Krümmungsradius kugelförmig abgerundet sind. Des weiteren sie angenommen, daß die Höhe h einer Mehrzahl, z.B. zwanzig, inkrementalen Vorschub-Weg-Schritten entspreche, die mit je einem der Ansteuerimpulse, mit denen der Schrittmotor 38 des Nachlauf-Regelventils 37 zur Positions-Sollwert-Vorgabe angesteuert wird, verknüpft sind. Des weiteren sei angenommen, daß die Position des Hydrozylinderkolbens 26, in der bei einer Abwärtsbewegung desselben die Oberelektrode 17 in mechanischen Kontakt mit dem oberen Werkstück 13 gelangt, in der es auf den Spitzen der Schweißbuckel im Abstand h von der Oberseite des unteren Werkstücks 14 abgestützt ist, sehr genau bestimmbar ist, sodaß, bezogen auf diese Position, auch die Anzahl derjenigen Ansteuerimpulse für den Schrittmotor 38 bestimmbar ist, die als Positions-Sollwert-Vorgabe für den Hub h-δh bestimmbar sind, der am Ende des Schweißzyklus ausgeführt sein muß, damit die beiden miteinander zu verschweißenden Werkstücke 13 und 14 fest miteinander verbunden sind, nachdem die Schweißbuckel 19 gleichsam abgeschmolzen sind. Die Erfassung dieser anfänglichen Berührungsposition, in der wegen der kleinflächigen Abstützung des oberen Werkstücks 13 an den Spitzen der Schweißbuckel 19 des unteren Werkstücks 14 der Übergangswiderstand zwischen den beiden Werkstücken 13 und 14 hoch ist, ist z.B. mit Hilfe eines Referenz-Signalgebers möglich, der ein definiertes elektrisches Ausgangssignal genau dann erzeugt, wenn sich die Oberelektrode 17 in einem definiertem Abstand von der unteren Elektrode 16 befindet, so daß, bei bekannten geometrischen Dimensionen der Werkstücke 13 und 14 die Zahl der Ansteuerimpulse für den Schrittmotor 38 des Nachlaufregelventils 37, die erforderlich sind, damit der Kolben von der Referenzposition in die anfängliche Anlageposition gelangt, genau bekannt ist, und, umgekehrt, aus der Zahl der dem Schrittmotor 38 zugeleiteten Ansteuerimpulse zuverlässig geschlossen werden kann, wo sich der Kolben 24 des Antriebszylinders 18 bzw. die Oberelektrode 17 befindet.

Ein Schweißzyklus wird nach dem Aufsetzen der Werkstücke 13 und 14 auf die untere Elektrode 16 dadurch eingeleitet, daß die Oberlektrode, gesteuert mittels des Nachlaufregelventils 37, "nach unten" bis in Anlage mit dem oberen Werkstück 13 verschoben wird.

Sofern sich während dieser Vorschub-Bewegung des Kolbens 26 und der Oberelektrode 17 das Umschaltventil 52 nicht schon in seiner sperrenden Grundstellung 0 befunden hat, wird es, bevor die Anlageposition der Oberelektrode 17 mit dem oberen Werkstück 13 erreicht ist, in diese sperrende Grundstellung 0 geschaltet, in der der Hochdruckausgang 54 des Druckversorgungsaggragats 31 bzw. des Hochdruckspeichers 23 gegen den P-Versorgungsanschluß 43 des Nachlaufregelventils abgesperrt und in den oberen Antriebsdruckraum 36 des Hydrozylinders 18 lediglich der Ausgangsdruck des Niederdruckspeichers 33 einkoppelbar ist, mit der Folge, daß, zunächst jedenfalls, die Kraft, mit der die Werkstücke 13 und 14 aneinander andrückbar sind, relativ gering ist, da der Überschuß der Kraft, die aus der Druckbeaufschlagung des oberen Antriebsdruckraumes 36 mit dem Ausgangsdruck des Niederdruckspeichers 33 resultiert, nur geringfügig größer ist als die Gegenkraft, die aus der Druckbeaufschlagung des unteren Druckraumes 28 mit dem in diesen eingekoppelten, hohen Ausgangsdruck Pₕ des Druckspeichers 29 resultiert, entsprechend dem Verhältnis der Ausgangsdrücke der Druckspeicher 29 und 33 sowie dem Flächenverhältnis F2/F1 der die An-. triebsdruckräume 36 und 28 des Antriebshydrozylinders beweglich begrenzenden Kolbenflächen 34 und 27.

Damit die Werkstücke 13 und 14 vor dem Auslösen des Schweiß-Stromflusses hinreichend kräftig aneinander gedrückt sind, so daß alle Schweißbuckel 19 des unteren Werkstückes 14 Berührungskontakt mit der diesem zugewandten unteren Begrenzungsfläche 59 des oberen Werkstückes 13 haben, gleichwohl jedoch die hieraus resultierenden, "elastischen" Einkerbungen am oberen Werkstück 13 und Abflachungen der Schweißbuckelspitzen nicht allzu ausgeprägt sind, sodaß, einerseits, ein für den Beginn des Schweißvorgangs erwünschter, noch hinreichend hoher Wert des elektrischen Übergangswiderstands im Bereich der Schweißbuckel 19 gegeben ist, jedoch, andererseits, gewährleistet ist, daß im Verlauf des Schweißvorganges, der zu einem mindestens teilweisen Abschmelzen der Schweißbuckel 19 führen soll, der Kolben 26 um den Hub h-δh nachsetzen kann, bis sich die untere Begrenzungsfläche 59 des oberen Werkstückes 13 in der Nähe der gegenüberliegenden "oberen" Begrenzungsfläche 61 des unteren Werkstückes 14 befindet, sind zum einen die Absolutwerte der Drücke Pₕ und Pₙ sowie deren Verhältnis, durch Vorgabe mittels der Druckbegrenzungsventile 57 und 58, so auf das Flächenverhältnis F₂/F₁ der wirksamen Kolbenflächen 34 und 27 abgestimmt, daß die in der Ausgangsposition für den Schweißvorgang herrschende, das obere Werkstück in Anlage mit den Schweißbuckeln 19 haltende Kraft auf einen relativ geringen Wert begrenzt ist, und es wird, andererseits, die Positions-Sollwertangabe - Anzahl der Ansteuerimpulse für den Schrittmotor 38 -, die einer entsprechenden Anzahl inkrementaler Vorschubschritte, deren Summe dem eingesteuerten Soll-Hub entspricht, so gewählt, daß eine dieser entsprechende End-Position der unteren Begrenzungsfläche 59 des oberen Werkstückes 13 etwa in oder sogar geringfügig unterhalb der oberen Begrenzungsfläche 61 des unteren Werkstückes 14 läge. Durch diese Sollwert-Vorgabe wird unter der Voraussetzung, daß die Schweißbuckel 19 nahezu vollständig abschmelzen, erreicht, daß die einander gegenüberliegenden Begrenzungsflächen 59 und 61 der Werkstücke 13 und 14 bis zum Abschluß des Schweiß-Zyklus mit einer Mindestkraft gegeneinander gedrängt sind und ihre beabsichtigte End-Position nahezu der Anlage-Position entspricht.

Die Auslösung des Schweißvorgangs erfolgt durch manuelle Betätigung eines Steuersignalgebers 62, mit dessen Steuer-Ausgangssignal ein elektronischer Schalter, z.B. ein Thyristorschalter 63 in seinen leitenden Zustand gesteuert wird, in dem sich der auf einen hinreichenden Energieinhalt aufgeladene Kondensator 12 über die Primärseite eines Transformators 64 entladen kann, dessen Sekundärkreis über die durch die Oberlektrode 17, die Werkstücke 13 und 14 und die Unterelektrode 16 gebildete Schweiß-Widerstandsstrecke geschlossen ist, wobei der Transformator 64 dahingehend ausgelegt ist, daß er eine hohe Stromübersetzung für den über die Widerstandsstrecke führenden Sekundärkreis vermittelt.

Gleichzeitig mit der Auslösung des Entladungs-Stromes, d.h. gleichzeitig mit der Ansteuerung des elektronischen Tor-Schalters 63, wird auch das Umschaltventil 52 zur Umschaltung in seine Durchflußstellung I angesteuert, in der nunmehr der hohe Ausgangsdruck Pₕ über das Nachlauf-Regelventil 37 auch in den oberen Druckraum 36 des Hydrozylinders 18 eingekoppelt wird. Dadurch wird eine drastische Erhöhung der Kraft erzielt, mit der der Kolben 26 in die durch die Positions-Sollwert-Vorgabe bedingte, untere End-Stellung gedrängt wird.

Diese Art der Steuerung des Schweiß-Vorganges führt zu dem qualitativ durch die Verlaufskurve 22 des Diagramms der Fig. 2 wiedergegebenen Zeitverlauf des Schweißstromes Iₛ mit einem im Zeitpunkt t₀ der Freigabe des Kondensator-Entladungskreises einsetzenden steilen Anstieg des Schweißstromes, der durch die rasch fortschreitende Abnahme des Übergangswiderstandes der Schweißstrecke bedingt ist, bis zu einem Maximalwert Iₛₘₐₓ, auf den ein exponentieller Abfall des Schweißstromes folgt, der durch die zunehmende Erschöpfung der jeweils momentan im Ladekondensator 12 noch gespeicherten elektrischen Energie bedingt ist.

Die insoweit erläuterte Art der Steuerung eines Schweißzyklus, insbesondere der Art der Sollwert-Vorgabe für die End-Position des oberen Werkstückes 13 in Relation zum unteren Werkstück 14, ist dann zweckmäßig, wenn die in der Kondensatoranordnung gespeicherte elektrische Energie in möglichst kurzer Zeit in die Werkstücke 13 und 14 eingekoppelt und ein möglichst rascher Ablauf des Schweißzyklus bei einem hohen Wert des Spitzenstromes Iₘₐₓ erzielt werden soll, damit sich bei den miteinander zu verbindenden Materialien eine gute Verschweißung erzielen läßt.

Die Antriebsvorrichtung 10 ist aufgrund der hohen Kolbenbeschleunigung und -verzögerung, die sich bei dem mittels des Nachlaufregelventils 37 gesteuerten Hydrozylinder 18 erreichen lassen sowie aufgrund der hohen Auflösung, mit der sich der Gesamthub des Kolbens 26 in inkrementale Teilschritte auflösen läßt, wobei eine Unterteilung dieses Gesamthubes in z.B. 20 Teilschritte ohne weiteres realisierbar ist, auch für eine Steuerung eines Schweißzyklus in der Weise geeignet, daß im Verlauf des Schweißvorganges, d.h. innerhalb der Zeitspanne Tₛ, die zwischen dem Einsetzen des Schweißstromes und dessen Abklingen auf etwa 1 bis 2 % seines Maximalwertes verstreicht, die Positions-Sollwert-Vorgabe für den Zylinderkolben 26 bzw. das obere Werkstück 13 schrittweise an die für den Schweißvorgang optimale End-Position angenähert wird.

Eine einfache Art einer solchen Schweißzyklus-Steuerung kann, wie durch die treppenförmige Sollwert-Verlaufskurve 66 des Diagramms der Fig. 2b schematisch wiedergegeben, darin bestehen, daß für die Zeitspanne zwischen dem Zeitpunkt t₀, zu dem der Schweißstrom einsetzt, und dem Zeitpunkt t₁ ein Positions-Sollwert h₁ vorgegeben wird, der etwa 3/4 der Anfangsdistanz h der ebenen Begrenzungsflächen 59 und 61 der Werkstücke 13 und 16 entspricht, wobei der Zeitpunkt t₁ dem Moment entspricht, zu dem der ansteigende Schweißstrom Iₛ etwa 75% seines Maximalwertes Iₛₘₐₓ erreicht hat. Danach wird der Positions-Sollwert h₂ vorgegeben, der etwa dem halben Wert der ursprünglichen Distanz h der Werkstücke 13 und 14 entspricht, und es wird ab dem Zeitpunkt t₂, zu dem der Schweißstrom Iₛ nach Durchlaufen seines Maximums Iₛₘₐₓ wieder auf etwa 75% des Maximalwertes abgeklungen ist, der "End"-Sollwert h₃ vorgegeben, der noch einem kleinen Restabstand δh der einander zugewandten Begrenzungsflächen 59 und 61 der Werkstücke 13 und 14 entspricht. Dieser End-Sollwert h₃ bleibt, über das Abklingen des Schweiß-Stromes Iₛ hinaus, für eine Zeitspanne, die einem Mehrfachen der Zeitspanne Tₛ, z.B. dem Fünffachen, entspricht, eingesteuert, d.h., bis davon ausgegangen werden kann, daß der Schweißvorgang abgeschlossen ist. Die schrittweise Sollwert-Vorgabe, wie dem Grundgedanken nach anhand der Fig. 2b erläutert, kann auch in Abhängigkeit vom Verlauf des Schweißstromes Iₛ gesteuert werden, derart, daß jeweils bei Erreichen eines bestimmten Wertes des Schweißstromes eine Änderung der Sollwert-Vorgabe ausgelöst wird.

Für die erläuterten Betriebsarten der Antriebseinrichtung 10 ist es zweckmäßig, wenn die zeitliche Korrelation des Einsetzens des Schweißstromes und der Ansteuerung des Umschaltventils 52 vorgebbar ist, derart, daß ein Nachsetzhub des Kolbens 26 nicht einsetzt, bevor der Schweißstrom eingesetzt hat, jedoch möglichst kurzzeitig nach dem Einsetzen des Schweißstromes beginnt.

## Patentansprüche

1. Elektrohydraulische Antriebseinrichtung für eine Widerstandsschweißmaschine, bei der aus elektrisch leitendem Material bestehende, miteinander zu verschweißende Werkstücke (13,14), zwischen einer maschinenfesten Elektrode (16) und einer beweglichen Elektrode (17) angeordnet, mit definierter Kraft, zu deren Entfaltung ein elektrisch steuerbarer Hydrozylinder (18) vorgesehen ist, aneinander andrückbar sind und hierbei zunächst über Schweißbuckel (19) gleicher Höhe h, die an mindestens einem der Werkstücke vorgesehen sind, und kleinflächiger Berührung, die noch mit einem relativ hohem elektrischen Übergangswiderstand verknüpft ist, gegeneinander abgestützt sind, wobei die Verschweißung der Werkstücke miteinander dadurch erfolgt, daß durch die Werkstücke ein Stromstoß hoher elektrischer Stromstärke und für die Wärmeentwicklung hinreichender Leistung geleitet wird, so daß durch den Stromstoß ein Abschmelzen der Schweißbuckel und eine Verschweißung der Werkstücke im Bereich der Schweißbuckel erzielbar ist, mit folgenden Merkmaler :
a) der Antriebs-Hydrozylinder (18) ist als Differentialzylinder mit einem hohen Wert des Flächenverhältnisses F2/F1 seiner für den Vorschub-Antrieb genutzten Kolbenfläche (34) des Betrages F2 zu der kleinerern Gegenfläche (27) des Betrages F1 des Antriebskolbens (26) ausgebildet;
b) zur Antriebssteuerung des Antriebs-Hydrozylinders (18) ist ein Nachlaufregelventil (37) vorgesehen, das mit elektrisch steuerbarer Positions-Sollwert-Vorgabe und mechanischer Positions-Istwert-Rückmeldung arbeitet;
c) zur Druckversorgung des Antriebs-Hydrozylinders (18) ist ein auf hohes Druckniveau Pₕ aufladbarer Druckspeicher (29) sowie ein auf niedriges Druckniveau Pₙ aufladbarer Nieder-Druckspeicher (33) vorgesehen, wobei das Verhältnis Pₕ/Pₙ mindestens dem Verhältnis F₂/F₁ der Kolbenflächen (34, 27) des Kolbens (26) enspricht;
d)es ist eine Umschalt-Ventilanordnung vorgesehen, die vor dem Auslösen des Schweißstromes Iₛ eine Grundstellung (0) einnimmt, in der in den großflächig begrenzten Antriebsdruckraum (36) des Hydrozylinders (18) über das Nachlauf-Regelventil (37) lediglich der niedrigere Speicherdruck Pn einkoppelbar ist, und mit dem Auslösen des Schweißstromstoßes und mindestens für dessen Dauer in eine Funktionsstellung (II) umschaltbar ist, in der über das Nachlauf-Regelventil (37) der hohe Speicherdruck Pₕ einkoppelbar ist, wobei dieser hohe Speicherdruck sowohl im Vorschub-Betrieb des Antriebs-Hydrozylinders (18) in dem die Abstützung der Werkstücke über die Schweißbuckel aneinander erzielt wird, als auch in einem während des Verschweißens erfolgenden Nachsetzbetrieb des Antriebs-Hydrozylinders in dessen kleinflächig begrenzten Antriebsdruckraum (28) eingekoppelt ist.

2. Antriebseinrichtung nach Anspruch 1, **dadurch gekennzeichnet, daß** die zeitliche Korrelation der Auslösung des Entladungs- bzw. des Schweißstromes und der Ansteuerung der Umschaltventil-Ventilanordnung (52) in deren mit dem Hochdruckbetrieb des Antriebs-Hydrozylinders (18) verknüpfte Funktionsstellung (II) vorgebbar ist.

3. Antriebseinrichtung nach Anspruch 1, **dadurch gekennzeichnet, daß** die in einer Kondensatoranordnung (12) speicherbare elektrische Energie und die Positions-Sollwert-Vorgabe für die Endstellung des beweglichen Werkstücks (13) dahingehend aufeinander abgestimmt sind, daß sich beim Abklingen des Schweißstromstoßes das bewegliche Werktstück (13) noch in einem kleinen Abstand δh von der ihm zugewandten Begrenzungfläche (61) des feststehenden Werkstückes (14) befindet.

4. Antriebseinrichtung nach Anspruch 1 oder Anspruch 2, **dadurch gekennzeichnet, daß** die Positions-Sollwert-Vorgabe für das bewegliche Werkstück (13) der fest vorgegebenen Position entspricht, die durch die Anordnung der dem beweglichen Werkstück (13) zugewandten großflächigen Begrenzungsfläche (61) des maschinenfest angeordneten Werkstücks (14) markiert ist, oder einer Position, die, in Nachsetzrichtung gesehen, noch jenseits dieser Begrenzungsfläche (61) angeordnet ist.

5. Verfahren zur Betriebssteuerung der Antriebseinrichtung gemäß einem der Ansprüche 1 bis 3, **dadurch gekennzeichnet, daß** die Positions-Sollwert-Vorgabe für die mindestens annähernd zu erreichende Endstellung des beweglichen Werkstücks (13) innerhalb der Dauer des Schweißstromstoßes schrittweise erfolgt.

6. Verfahren nach Anspruch 4, **dadurch gekennzeichnet, daß** die Positions-Sollwert-Vorgabe für die Annäherung des beweglichen Werkstückes (13) an das feststehende Werkstück (14) in Abhängigkeit von definierten, zeitlich nacheinander erreichten Werten der Stärke des Schweißstromes erfolgt.

## Claims

1. Electrohydraulic drive unit for a resistance welding machine, in which workpieces (13, 14) to be welded to one another and consisting of electrically conducting material and arranged between an electrode (16) fixed to the machine and a moveable electrode (17), can be pressed against one another with a defined force for the execution of which an electrically controllable hydraulic cylinder (18) is provided, and whereby the workpieces are initially supported on one another via weld humps (19) of equal height h that are provided on at least one of the workpieces and make contact over a small area that is still coupled to a relatively high electrical contact resistance, wherein the welding of the workpieces to one another is carried out by passing through the workpieces a current surge of high electrical intensity and sufficient power to develop heat, so that due to the current surge a melting of the weld humps and a fusion of the workpieces in the region of the weld humps can be achieved, with the following features:
a) the drive hydraulic cylinder (18) is designed as a differential cylinder with a high value of the surface ratio F₂/F₁ of its piston surface (34), utilised for the feed drive, of magnitude F₂ to the smaller countersurface (27) of magnitude F₁ of the drive piston (26);
b) for the drive control of the drive hydraulic cylinder (18) a lag regulating valve (37) is provided that operates with an electrically controllable presetting of the desired position and mechanical feedback of the actual position;
c) for pressure supply to the drive hydraulic cylinder (18) a pressure storage vessel (29) that can be charged to a high pressure Pₕ as well as a low pressure storage vessel (33) that can be charged to a low pressure Pₙ are provided, wherein the ratio Pₕ/Pₙ corresponds at least to the ratio F₂/F₁ of the piston surfaces (34, 27) of the piston (26);
d) a switch-over valve arrangement is provided that before the triggering of the welding current Iₛ adopts a base setting (0) in which in the large-area bounded drive pressure space (36) of the hydraulic cylinder (18) only the lower storage vessel pressure Pₙ can be coupled via the lag regulating valve (37), and with the triggering of the welding current surge and at least for its duration can be switched to a function setting (II) in which the high storage pressure Pₕ can be coupled via the lag regulating valve (37),
wherein this high storage pressure can be coupled in the feed operation of the drive hydraulic cylinder (18) in which the support of the workpieces on one another is achieved via the weld humps, and also in a readjustment operation of the drive hydraulic cylinder taking place in its small-area bounded drive pressure space (28) during the welding.

2. Drive unit according to claim 1, **characterised in that** the time correlation of the triggering of the discharge current and welding current and the control of the switch-over valve arrangement (52) in their function setting (II) coupled to the high pressure operation of the drive hydraulic cylinder (18) can be predetermined.

3. Drive unit according to claim 1, **characterised in that** the electrical energy that can be stored in a capacitor arrangement (12) and the preset desired position value for the end setting of the moveable workpiece (13) can be matched to one another so that when the welding current surge decays the moveable workpiece (13) is still at a small distance δh from the boundary surface (61) facing it, of the stationary workpiece (14).

4. Drive unit according to claim 1 or claim 2, **characterised in that** the presetting of the desired position value for the moveable workpiece (13) corresponds to the fixed predetermined position that is marked by the arrangement of the large-area boundary surface (61) facing the moveable workpiece (13), of the workpiece (14) fixedly arranged on the machine or a position that, seen in the readjustment direction, is still arranged on the far side of this boundary surface (61).

5. Method for the operational control of the drive unit according to one of claims 1 to 3, **characterised in that** the presetting of the desired position value for the end setting of the moveable workpiece (13) that is to be at least approximately reached takes place stepwise within the duration of the welding current surge.

6. Method according to claim 4, **characterised in that** the presetting of the desired position value for the approach of the moveable workpiece (13) to the stationary workpiece (14) takes place depending on defined, chronologically successive values of the welding current intensity.

## Revendications

1. Dispositif d'entraînement électrohydraulique pour une machine à souder par résistance dans lequel des pièces (13, 14) en matériau électriquement conducteur à souder ensemble, disposées entre une électrode (16) solidaire de la machine et une électrode (17) mobile, peuvent être pressées l'une contre l'autre avec une force définie, pour la production de laquelle il est prévu un vérin hydraulique (18) à commande électrique, et sont pour cela d'abord mises en appui l'une contre l'autre par l'intermédiaire de bossages de soudage (19) de même hauteur h, prévus sur au moins une des pièces, et d'un contact de petite surface lié à une résistance électrique de passage encore relativement élevée, les pièces étant soudées ensemble par le passage à travers elles d'une impulsion de courant de forte intensité électrique et d'une puissance suffisante pour dégager de la chaleur, de sorte que l'impulsion de courant provoque une fusion des bossages et un soudage des pièces au niveau des bossages de soudage, ledit dispositif présentant les caractéristiques suivantes :
a) le vérin hydraulique d'entraînement (18) est un vérin différentiel présentant une valeur élevée du rapport F₂/F₁ de sa surface de piston (34), de valeur F₂, utilisée pour l'entraînement d'avance et de la surface opposée plus petite (27), de valeur F₁, du piston d'entraînement (26) ;
b) il est prévu pour la commande du vérin hydraulique d'entraînement (18) une vanne de réglage d'asservissement (37) qui fonctionne avec un réglage à commande électrique de la valeur de consigne de position et un retour d'information mécanique sur la valeur réelle de position ;
c) il est prévu pour l'alimentation en pression du vérin hydraulique d'entraînement (18) un accumulateur de haute pression (29) rechargeable à un niveau de pression élevé Pₕ ainsi qu'un accumulateur de basse pression (33) rechargeable à un niveau de pression plus faible Pₙ, le rapport Pₕ/Pₙ correspondant au moins au rapport F₂/F₁ des surfaces de piston (34, 27) du piston (26) ;
d) il est prévu une vanne d'inversion qui, avant le déclenchement du courant de soudage Iₛ, prend une position initiale (0) dans laquelle seule la faible pression d'accumulateur Pₙ peut être injectée dans la chambre de pression d'entraînement (36) limitée par une grande surface du vérin hydraulique (18) par l'intermédiaire de la vanne de réglage d'asservissement (37) et qui peut être commutée, lors du déclenchement de l'impulsion de courant de soudage et au moins pendant sa durée, dans une position de fonctionnement (II) dans laquelle la pression d'accumulateur élevée Pₕ peut être injectée par l'intermédiaire de la vanne de réglage d'asservissement (37), cette pression d'accumulateur élevée étant injectée, aussi bien en mode d'avance du vérin hydraulique (18) dans lequel on obtient l'appui des pièces l'une contre l'autre par l'intermédiaire des bossages de soudage, que dans un mode de repositionnement du vérin hydraulique d'entraînement ayant lieu pendant le soudage, dans sa chambre de pression d'entraînement (28) limitée par une petite surface.

2. Dispositif d'entraînement selon la revendication 1, **caractérisé par le fait que** la corrélation temporelle entre le déclenchement du courant de décharge, c.-à-d. du courant de soudage, et la commande de la vanne d'inversion (52) dans sa position de commutation (II), liée au fonctionnement sous haute pression du vérin hydraulique d'entraînement (18), peut être fixée.

3. Dispositif d'entraînement selon la revendication 1, **caractérisé par le fait que** l'énergie électrique emmagasinée dans un condensateur (12) et le réglage de la valeur de consigne de position pour la position finale de la pièce mobile (13) sont accordés de telle façon que, lors de l'annulation de l'impulsion de courant de soudage, la pièce mobile (13) se trouve encore à une petite distance résiduelle δh de la surface limite (61) tournée vers elle de la pièce fixe (14).

4. Dispositif d'entraînement selon la revendication 1 ou 2, **caractérisé par le fait que** le réglage de la valeur de consigne de position pour la pièce mobile (13) correspond à la position définie de manière fixe qui est repérée par la disposition de la surface limite (61) de grande dimension tournée vers la pièce mobile (13) de la pièce (14) solidaire de la machine ou à une position qui, vu dans le sens du repositionnement, est située encore au-delà de cette surface limite (61).

5. Procédé de commande du dispositif d'entraînement selon l'une des revendications 1 à 3, **caractérisé par le fait que** le réglage de la valeur de consigne de position pour la position finale à atteindre au moins approximativement par la pièce mobile (13) est effectué progressivement pendant la durée de l'impulsion de courant de soudage.

6. Procédé selon la revendication 4, **caractérisé par le fait que** le réglage de la valeur de consigne de position pour l'approche de la pièce mobile (13) de la pièce fixe (14) est effectué en fonction de valeurs définies, successivement atteintes dans le temps, de l'intensité du courant de soudage.
